# EUROPEAN PATENT SPECIFICATION

(11) **EP 2 666 617 B1**
(45) Date of publication and mention of the grant of the patent: **05.07.2017**
(21) Application number: 12400017.5
(22) Date of filing: 23.05.2012
(51) Int. Cl.: B29C 70/54, B29C 70/68, B29B 11/16, B29C 65/72

(54) **A method of producing toughened composite structures**
Verfahren zur Herstellung von gehärteten Verbundstoffstrukturen
Procédé de production de structures composites renforcées

(43) Date of publication of application: 27.11.2013
(73) Proprietor: AIRBUS HELICOPTERS DEUTSCHLAND GmbH, 86609 Donauwörth (DE)
(72) Inventor: Schieler, Oliver, 66917 WALLHALBEN (DE); Parlevliet, Patricia, 81667 MÜNCHEN (DE); Weimer, Christian, 81543 MÜNCHEN (DE)
(74) Representative: GPI & Associés

(56) References cited:
- EP-A1- 0 475 782
- EP-A1- 2 384 884
- WO-A1-02/057527
- US-A1- 2007 020 431

## Description

The invention is related to a method of producing toughened composite structures with the features of the preamble of claim 1.

If high load regions at interfaces of joined carbon fiber reinforced plastic (CFRP)-parts are overloaded cracks may result and it is necessary to toughen this interface for security reasons. Thermoset matrices of CFRP parts manufactured with preforming and liquid composite moulding (LCM) have a high brittleness with negative influence to their performance. With the use of high temperature thermoplastics a toughening effect can be achieved in highly stressed areas. However, these thermoplastics usually make the compaction of preforms, required to obtain a near net shape, difficult. On top, the activation of thermoplastics, needed to provide a preform that can be handled before impregnation with the resin, with an oven is a highly energy consuming process which it is important to avoid. Structural parts, e. g. of CFRP, thermoset based,..., cannot be tailored to thermoplastic forms as desired due to a lack of:
- available product forms of special polymers;
- automation means to place that thermoplastic content in position;
- processing or compaction techniques for preforming with thermoplastic content;
- cost-efficiency of production of CFRP parts.

There are different solutions for joining thermoplastic polymers with low energy consumption, e.g. the ultrasonic welding technology. EP 0475782 discloses this technology for welding thermoplastic belts. US 3459610 discloses this technology for welding thermoplastic films.

The documents US 2008/0295755, DE10324141A1 or US20070020431 disclose respectively stitching technology used for preform assembly. Wulfhorst, B., Moll, K.-U: Konferenz-Einzelbericht: TEX-Comp 3, 3rd Internat. Symp., New Textiles for Composites, Session 1, Textile Preforming, Aachen, Dec. 9-11, Aachen, 1996, S.4/1- 4/12 discloses stitching technology used to reinforce three dimensional structures. US7507446 discloses the use of non or semi-functionalized stitching yarns, e.g. polyester or standard polyamid (PA), in the stitching preform assembly routine for the preform assembly and in the production of tailored reinforcements. The yarn functions as a third phase for the tailored reinforcements after the infusion; it has no further functions and the whole part is heated by induction. Local heating for preforming is not achieved, particularly not for joining of preforms.

The document EP 1317501 discloses a flexible polymer element for use in a curable composition wherein the element is adapted to dissolve in the curable composition. Said flexible polymer element is in solid phase. The flexible polymer element undergoes at least partial phase transition to fluid phase on contact with a component of the curable composition in which it is soluble, at a temperature which is less than the temperature for substantial onset of gelling and/or curing of the curable composition. EP 1317501 further discloses a support structure or carrier for a curable composition comprising flexible polymer elements in which fibres are held in a desired configuration, without use of a mould, by the elements, which dissolve and disperse in the curable composition prior to or at the start of the curing process. Said flexible polymer elements in the form of fibres and the like are useful for stitching. The composition is held in desired configuration by the flexible polymer element until the curable component viscosity increases, obviating the need for support by the flexible polymer element or by a mould. The flexible polymer elements remain in solid phase at ambient or elevated temperature, up to 300 or 400 C, in the absence of dissolving resin. The flexible polymer elements can undergo phase transition as desired by contact with dissolving resin and curing under conditions, for example temperatures in excess of 60C, for example of the order of 140 C. The polymer of the flexible element may be adapted to form a common phase on curing of the curable composition, e. g. in solution in the thermosetting resin. The polymer forming the flexible polymer element is preferably adapted to undergo phase transition, i. e. to at least partially dissolve in the resin matrix at a temperature Ts in a range at least part of which is less than the cure temperature of the resin matrix Tc. The flexible element may contain for example conventional toughening agents such as liquid rubbers having reactive groups, aggregates such as glass beads, rubber particles and rubber-coated glass beads, metal particles such as Ti, Al or Fe filler such as polytetrafluorethylene, silica, graphite, boron nitride, clays such as mica, talc and vermiculite, pigments, nucleating agents, and stabilisers such as phosphates; agents for increased solvent resistance such as F containing agents, flame retardants such as metal oxides FeO & TiO crystalline polymers incorporated as blend or as block or random copolymer for example polyether ketones; conventional binder such as low MW thermoset monomers for example epoxy, acrylic, cyanate, ester, BMI-type polymers and the like; conventional adhesives such as epoxy polymers and the like ; conventional coating agents etc. The flexible element preferably is a fibre or filament having diameter d, or is a film or ribbon having thickness t wherein d or t are in the range up to 100 micron, preferably from 1 to 80 micron for example 30-80 micron, more preferably 30-65 micron. Flexibility is a compromise between element thickness or diameter and polymer modulus. The element is preferably characterised by a % elongation to break in the range 1-75, preferably 3-50% lower for stitching application and higher for weaving application, conferred by polymer type and by the method of manufacture, e. g. stretching and orientation. The flexible polymer element is conformable, deformable, drapeable or manipulateable, enabling knotting, stitching, winding and the like. The flexible polymer element may be characterised by binding or adhesion properties, for example conferred by softening above ambient temperatures. The flexible element comprises an amorphous polymer having elastomeric properties additionally below its glass transition temperature or softening temperature, more preferably comprises a thermoplastic polymer. Useful thermoplastic include polymers such as cellulose derivatives, polyester, polyamide, polyimide, polycarbonate, polyurethane, polyacrylonitrile, poly (methyl methacrylate), polystyrene and polyaromatics such as polyarylethers, polyarylketones and particularly polyarylsulphones. Copolymers may also be used such as polyesteramide, polyamideimide, polyetherimide, polyaramide, polyarylate, poly (ester) carbonate, poly (methyl methacrylate/butyl acrylate), polyethersulphone-etherketone. Polymer blends may also be used. The thermoplastics give a toughening blend with the thermoset (epoxy) matrices for CFRP. The thermoplastic has no further functions besides toughening. The disclosure of EP 1317501 is basically: take the foil, put it in the interface, fix it and get rid of the foil material in excess. The high temperature thermoplastics of EP 1317501 are coated with standard binders, to enable preform assembly for toughening of a structure and also to reinforce interfaces in joining areas. Said high temperature thermoplastics can not be used during preforming with standard means due to their high softening temperature. Standard binder activation/ preforming equipment does not reach these temperatures.

Document WO 02/057527 A1 discloses the preamble of claim 1.

Standard binders on preforms have the disadvantage, that they neither toughen the structure nor can they be used to stitch, due to their epoxy basis. On top, standard fabrics with binder on it cannot be stitched without further damage to the fibre architecture.

State of the art composite stitching threads, e. g. polyester, carbon fiber (CF), glass fiber (GF) ... have the following disadvantages:
- reinforcement fiber misalignment, due to thread tension;
- additional material in the end-product;
- not soluble;
- interface issues, e. g. sizing compatibility, fiber packaging of threads; and
- "fish eyes".

A so called "fish eye" is an error of non crimp fabrics (NCF), which is characterized by a gap of the knitting yarn. Fish eyes have the disadvantages that the fibers are no longer straight and the open areas of the fish eyes will end up in the final laminate as unreinforced, resin rich areas. Fish eyes and wider gaps, which may extend over several knitting points or even over the total width of an NCF, are discontinuities in the laminate and may cause final failure of the laminate and therefore are important to analyze.

Three major disadvantages for the use of thermoplastics are:
- process time very long, e. g. additional process steps by input of foil and pre-foil,
- too much material in the interface, which makes the composite heavier,
- a fleece stop, i. e. at the infusion process in resin transfer moulding (RTM), the matrix stops at the foil.

It is an object of the invention to provide an improved method of producing toughened composite structures.

The solution is provided with a method of producing toughened composite structures with the features of claim 1. Preferred embodiments of the invention are presented with the subclaims.

According to the invention a method of producing toughened composite structures comprises the following steps: Providing thermoplastic yarn in solid phase and providing at least more than one subpreform, stitching at least one of the at least more than one subpreforms with the thermoplastic yarn to respectively stabilize said at least one stitched subpreform and joining the at least more than one subpreforms alongside each other to a configuration for a preform. Providing welding means and arranging said welding means next to the at least more than one subpreforms locally at said stitches. Activating said welding means for welding of the at least more than one subpreforms by melting the thermoplastic yarn as the filler material at least alongside the subpreforms and thus connecting the at least more than one subpreforms to said preform. Finally an impregnation matrix of liquid resin is infused into the preform to toughen the preform along the yarns while curing the preform to a composite. The inventive method uses thermoplastic yarn stitched into a preform. The number of stitches in the preform is adapted to the right amount of thermoplastic material in the preform and the inventive method allows adaption of the directions of the stitches to the most suitable stiffening effects in the preform. The inventive method comprises only one process step: use of the yarn as a stabilization of the preform, use of the yarn for welding the at least two subpreforms together to a preform with the welding process and use of the yarn during the infusion process for toughening in the right direction alongside the subpreforms. Thus 3 problems are solved with one process step:
yarn as a preform stabilization,
yarn for toughening at the right direction, and
yarn as welding filler materials for welding/joining together of two subpreforms to a preform.

By introducing high temperature polymer (HTP) by means of stitching according to the inventive method, the stitches take over the function of binding the HTP-fibers together for preform assembly and - at the same time - the function of toughening the structure / interface in the later composite. The stitching process itself allows introduction of the HTP as a stitching thread into the fiber architecture of the at least one subpreform. Once the HTP stitch is placed, it can be used as welding aid during further preforming compaction. The inventive method is the combination of the three above mentioned steps to one preforming process step by the use of only one yarn. An advantage of the invention is a cost efficient method established by:
reduced complexity of the product form of the HTP that is used, i. e. yarn instead of veils;
one material is used for the preforming process as well as the toughening process in one step;
fast compaction and preform assembly by means of welding technique, e. g. using ultrasonic or induction means.

One further advantage of the inventive method is the increase of the degree of automation by the application of combined stitch-welding and the reduced energy-consumption with no time compared to an energy consuming binding process by heating of the whole preform according to the state of the art. Thus, costs are being reduced by eliminating different process steps. Further advantages of the inventive method are:
Light weight of the composite: less Rivets required, no adhesives
Smart Joints: easy dismantling or function integration, such as tailored mechanical properties, e.g. damage tolerance.

Possibility to toughen highly stressed areas of composites
Higher degree of automation in the preform assembly
Reduction of energy effort and process time => Cost savings and
One shot manufacturing technology.

According to a preferred embodiment of the invention the welding is ultrasonic (US) welding or induction welding. In particular at preliminary experiments US-welding has proven suitable to be combined with stitching according to the inventive method. Ultrasonic welding is a joining technique connecting e.g. thermoplastic or metallic subjects to one another by supplying energy in the form of ultrasound or of high-frequency mechanical oscillation into the preforms to be welded. A sonotrode which presses a first subpreform against a second subpreform is excited into oscillation in the ultrasonic range. By way of the transmission of the movement energy into the region of the border surface of both subpreforms, local frictional heat is produced which softens or melts the surfaces of the subpreforms and connects them together. The functional sonotrode is placed on top of the stitches for melting them, making their holes smaller, and at the same time bonding and compacting the two subpreforms alongside together to produce the preform.

According to a preferred embodiment of the invention the liquid resin uses epoxy based powder binder, particularly epoxy, as less volatile products, improving health, safety and environment and allowing the process time to be reduced due to a fast welding process.

According to a further preferred embodiment of the invention the thermoplastic yarn is selected among a group of thermoplastic polymers that provide a toughening effect with the liquid resin by means of chemical interaction, e. g. PSU, PPSU, PES, SRP, polyamides, polyether, polyimide, PEI, phenoxy and copolymers.

According to a further preferred embodiment of the invention the liquid resin is a thermosetting resin chosen among a group of products comprising epoxies, multifunctional epoxy, polyimides (BMI) or cyanate esters.

According to a further preferred embodiment of the invention the liquid resin is a thermoplastic resin system chosen among a group of products comprising polyamides, e. g. anionic polyamide-6, PA11, polyesters, e. g. cyclic PBT, liquid crystalline polymers, polyketones or polysulfones.

According to a further preferred embodiment of the invention the thermoplastic yarns have a softening point suitable for preforming typically in a range 60°C - 350C°, preferably 60°C - 250°C, most preferably 180°C - 250°C.

According to a further preferred embodiment of the invention the stitching is provided with at least one stitching pattern, such as multiple stitching rows or parallel stitching seams.

According to a further preferred embodiment of the invention the yarns comprise coated yarns of two different polymers or a metal coating on top of a polymer.

According to a further preferred embodiment of the invention a maximum number of 16 layers is provided for the preform.

According to a further preferred embodiment of the invention the stitching comprises HTP stitches used to bond the preform to core materials with a thermoplastic (TP) surface, e. g. all TP or wrapped soluble cores.

A preferred embodiment of the invention is presented with the following description with reference to the accompanying drawings.

Fig. 1 shows a spherical view of a joining area of a CFRP-structure, and

Fig.2 shows cross sectional views of preforms produced by a method according to the invention.

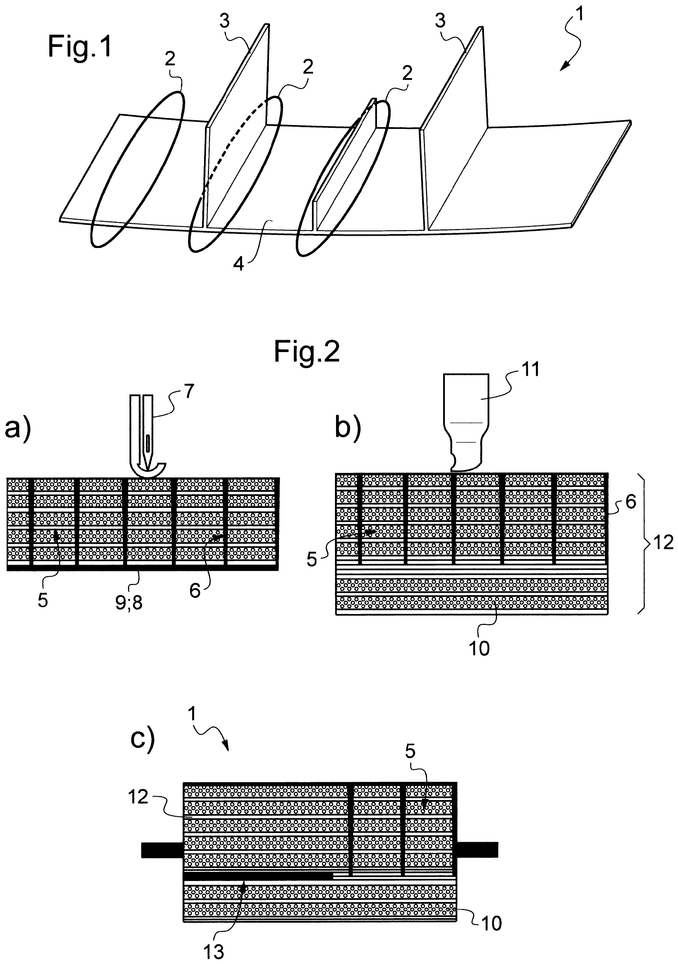

According to Fig. 1 a composite structure 1 has high load regions 2 at interfaces of joined CFRP-parts 3, 4. The reinforcement comprises non crimb fabric (NCF), woven fabric, UD tapes with glass, carbon, aramid or basalt fibres.

According to Fig. 2a a subpreform 5 is stitched with a tailored, high temperature polymer (HTP)-thread or -yarn 6 by stitching means 7. A double lock stitch 8 with different upper- and lower threads is provided along an assembly surface 9 of the subpreform 5. The HTP-thread or -yarn 6 is made of different material or with a different concentration of material relative to the double lock stitch 8. The threads/yarns 6, 8 comprise coated yarns of two different polymers, a metal coating on top of a polymer, etc.

The stitching pattern is provided with multiple stitching rows or special stitching patterns, such as parallel stitching seams with a distance of 3mm. The stitching parameters are stitch length: 2 - 50mm or preferably: 2 - 4mm. The yarns have a yarn count between 10dtex - 1200dtex most preferably 100dtex - 200dtex, e. g. Grilon K-140 167F20. The sewing speed is 20 - 3000 stitches/minute; preferably: 100 - 200 stitches/minute.

During this process step, the subpreform 5 can still be formed and draped to different shapes, since the subpreform 5 is still not ready compacted and the subpreform 5 is still not too stiff for draping and forming.

According to Fig. 2b the subpreform 5, held in shape by the stitches 6, is placed alongside its assembly surface 9 on a further subpreform 10. Ultrasonic or induction welding means 11 process the HTP yarn 6 to compact, further bond and stiffen the preform 12 assembled from the subpreform 5 and the further subpreform 10. Alternatively infrared (IR) heating or any other local heating mechanism is used followed by a roller (not shown).

A maximum number of 16 layers is provided for the preform 12.

The ultrasonic welding process is effected with a welding head 11 with a horn adapted for continuous- and non-continuous ultrasonic welding, a typical contact force for the process is in the range 50N - 200N with preferably 80N - 100N and a typical amplitude for the process is in the range 9µm - 30µm preferably 15µm - 21µm. A typical velocity for the continuous ultrasonic welding process is in the range 1m/min - 4m/min preferably 1,5m/min - 2,5m/min and a typical welding time for the non-continuous process is in the range 0,5s - 4s preferable 1s - 2s. The ultrasonic welding process is effected with a clamping force of the preform in the range of 70N - 230N, preferably >200N.

According to Fig. 2c the composite 1 is finally manufactured from the assembled preform 12 by applying liquid moulding technologies, such as vacuum assisted resin transfer moulding (VARTM), resin transfer moulding (RTM), liquid resin infusion (LRI), vacuum assisted process (VAP), or Seemann composite resin infusion moulding process (SCRIMP), or any other method such as combined prepreg infusion (CPI), qualified resin transfer moulding (SQRTM) or controlled atmospheric pressure resin infusion (CAPRI). The HTP double lock stitch 8 is solved and embedded for toughening the liquid resin of epoxy during curing to a toughened zone 13. The tailored stitches of thermoplastic polymers combined with the infusion resin provide a toughening effect by means of chemical interaction, e. g. polysulfon (PSU), polyphenylsulfon (PPSU), polyethersulfon (PES), self reinforced polymer (SRP), polyamides, polyetherimide (PEI), phenoxy and copolymers.

The impregnation matrix is a thermosetting resin chosen among a family of products comprising epoxies, multifunctional epoxy, polyimides (BMI) or cyanate esters. An alternative impregnation matrix is a thermoplastic resin system chosen among a family of products comprising polyamides, e. g. anionic polyamide-6 (PA6), PA11, polyesters, e. g. cyclic PBT, liquid crystalline polymers, polyketones or polysulfones.

The thermoplastic yarns have a softening point suitable for preforming typically in a range 60°C - 350C°, preferably 60°C-250°C, most preferably 180°C - 250°C.

Alternatively the HTP stitch is used to bond the preform 12 to core materials with a thermoplastic (TP) surface, e. g. all TP or wrapped soluble cores.

### Reference List

- 1: composite
- 2: high load regions
- 3: CFRP-part
- 4: CFRP-part
- 5: subpreform
- 6: Yarn
- 7: stitching means
- 8: double lock stitch
- 9: assembly surface
- 10: subpreform
- 11: welding means
- 12: preform.
- 13: toughened zone

## Claims

1. A method of producing toughened composite structures (1) with the following steps:
a) Providing thermoplastic yarn (6, 8),
b) Providing at least more than one subpreform (5, 10),
c) Stitching at least one of the at least more than one subpreforms (5, 10) with the thermoplastic yarn (6, 8), and
d) Joining the at least more than one subpreforms (5, 10) to a preform (12),
**characterized by**
e) Providing and arranging welding means (11) locally at said stitching on top of the at least more than one subpreforms (5, 10),
f) Welding the at least more than one subpreforms (5, 10) by melting the thermoplastic yarn (6, 8) as a filler material,
g) Finally infusing liquid resin into the preform (12), and
h) Curing the infused preform (12).

2. The method according to claim 1, **characterized in that** the welding is ultrasonic welding or induction welding.

3. The method according to claim 1, **characterized in that** the liquid resin is epoxy.

4. The method according to claim 1, **characterized in that** the thermoplastic yarn (6, 8) is selected among a group of thermoplastic polymers that provide a toughening effect with the liquid resin by means of chemical interaction, e. g. PSU, PPSU, PES, SRP, polyamides, polyether, polyimide, PEI, phenoxy and copolymers.

5. The method according to claim 1, **characterized in that** the liquid resin is a thermosetting resin chosen among a group of products comprising epoxies, multifunctional epoxy, polyimides (BMI) or cyanate esters.

6. The method according to claim 1, **characterized in that** the liquid resin is a thermoplastic resin system chosen among a group of products comprising polyamides, e. g. anionic polyamide-6, PA11, polyesters, e. g. cyclic PBT, liquid crystalline polymers, polyketones or polysulfones.

7. The method according to claim 1, **characterized in that** the thermoplastic yarns (6, 8) have a softening point suitable for preforming typically in a range 60°C - 350C°, preferably 60°C - 250°C, most preferably 180°C - 250°C.

8. The method according to claim 1, **characterized in that** the stitching is provided with at least one stitching pattern, such as multiple stitching rows or parallel stitching seams.

9. The method according to claim 8, **characterized in that** the stitching comprises HTP stitches used to bond the preform (12) to core materials with a thermoplastic (TP) surface, e. g. all TP or wrapped soluble cores.

10. The method according to claim 1, **characterized in that** the yarns (6, 8) comprise coated yarns of two different polymers or a metal coating on top of a polymer.

11. The method according to claim 1, **characterized in that** a maximum number of sixteen layers is provided for the preform (12).

## Patentansprüche

1. Verfahren zur Herstellung von gehärteten Verbundstoffstrukturen (1) mit den folgenden Schritten:
a) Bereitstellen von thermoplastischem Garn (6, 8),
b) Bereitstellen von mindestens mehr als einem Unter-Vorformling (5, 10),
c) Vernähen mindestens eines der mindestens mehr als einen Unter-Vorformlinge (5, 10) mit dem thermoplastischen Garn (6, 8), und
d) Zusammenfügen der mindestens mehr als einen Unter-Vorformlinge (5, 10) zu einem Vorformling (12),
**gekennzeichnet durch**
e) Bereitstellen und Anordnen von Schweißmitteln (11) am Ort der Vernähung auf der Oberseite der mindestens mehr als einen Unter-Vorformlinge (5, 10),
f) Verschweißen der mindestens mehr als einen Untervorformlinge (5, 10) durch Schmelzen des thermoplastischen Garns (6, 8) als ein Füllmaterial,
g) schlussendlich Einspritzen eines flüssigen Harzes in den Vorformling (12) und
h) Aushärten des eingespritzten Vorformlings (12).

2. Verfahren nach Anspruch 1,
**dadurch gekennzeichnet, dass** das Schweißen ein Ultraschallschweißen oder ein Induktionsschweißen ist.

3. Verfahren nach Anspruch 1,
**dadurch gekennzeichnet, dass** das flüssige Harz ein Epoxyharz ist.

4. Verfahren nach Anspruch 1,
**dadurch gekennzeichnet, dass** das thermoplastische Garn (6, 8) ausgewählt ist aus einer Gruppe thermoplastischer Polymere, die einen Härtungseffekt mit dem flüssigen Harz durch eine chemische Wechselwirkung bewirken, zum Beispiel PSU, PPSU, PES, SRP, Polyamide, Polyether, Polyimide, PEI, Phenoxy und Copolymere.

5. Verfahren nach Anspruch 1,
**dadurch gekennzeichnet, dass** das flüssige Harz ein wärmehärtbares Harz ist, ausgewählt aus einer Gruppe von Produkten, die umfasst: Epoxyharze, multifunktionales Epoxyharz, Polyimide (BMI) oder Cyanatester.

6. Verfahren nach Anspruch 1,
**dadurch gekennzeichnet, dass** das flüssige Harz ein thermoplastisches Harzsystem ist, ausgewählt aus einer Gruppe von Produkten, die umfasst: Polyamide, z.B. anionisches Polyamid-6, PA11, Polyester, z.B. cyclisches PBT, Flüssigkristallpolymere, Polyketone oder Polysulfone.

7. Verfahren nach Anspruch 1,
**dadurch gekennzeichnet, dass** die thermoplastischen Garne (6, 8) einen Erweichungspunkt aufweisen, der für das Vorformen geeignet ist, typischerweise in einem Bereich von 60 °C - 350 °C, vorzugsweise 60 °C - 250 °C, äußerst bevorzugt 180 °C - 250 °C.

8. Verfahren nach Anspruch 1,
**dadurch gekennzeichnet, dass** das Vernähen mit mindestens einem Nahtmuster durchgeführt wird, wie mehreren Stichreihen oder parallelen Vernähungsnähten.

9. Verfahren nach Anspruch 8,
**dadurch gekennzeichnet, dass** das Vernähen HTP-Stiche umfasst, die verwendet werden, um den Vorformling (12) mit Kernmaterialien mit einer thermoplastischen Oberfläche (TP) zu verbinden, z.B. alle TP oder gewickelte lösbare Kerne.

10. Verfahren nach Anspruch 1,
**dadurch gekennzeichnet, dass** die Garne (6, 8) beschichtete Garne aus zwei unterschiedlichen Polymeren oder eine Metallbeschichtung auf einem Polymer umfassen.

11. Verfahren nach Anspruch 1,
**dadurch gekennzeichnet, dass** eine maximale Anzahl von sechzehn Schichten für den Vorformling (12) vorgesehen ist.

## Revendications

1. Méthode de production de structures composites durcies (1), avec les étapes suivantes:
a) Prévoir un fil thermoplastique (6,8),
b) Prévoir au moins plus d'une sous-préforme (5,10),
c) Coudre au moins une des au moins plus d'une sous-préforme (5,10) avec le fil thermoplastique (6,8), et,
d) Joindre ladite au moins plus d'une sous-préforme (5,10) à la préforme (12),
**caractérisée par** :
e) la fourniture et la disposition de moyens de soudure (11) localement à ladite couture au-dessus de ladite au moins plus d'une sous-préforme (5,10),
f) la soudure de ladite au moins plus d'une sous-préforme (5,10) en faisant fondre le fil thermoplastique (6,8) pour obtenir un matériau de remplissage,
g) l'imprégnation finale d'une résine liquide dans la préforme (12), et
h) la polymérisation de la préforme imprégnée (12).

2. Méthode selon la revendication 1, **caractérisée en ce que** la soudure est une soudure par ultrason ou par induction.

3. Méthode selon la revendication 1, **caractérisée en ce que** la résine liquide est de la résine époxy.

4. Méthode selon la revendication 1, **caractérisée en ce que** le fil thermoplastique (6,8) est sélectionné parmi un groupe de polymères thermoplastiques qui provoquent un effet durcissant de la résine liquide au moyen d'une interaction chimique par exemple, PSU, PPSU, PES, SRP, polyamides, polyéther, polyimide, PEI, phénoxy et copolymères.

5. Méthode selon la revendication 1, **caractérisée en ce que** la résine liquide est une résine thermodurcissable choisie parmi un groupe de produits comprenant des époxydes, des époxydes multifonctions, des polyimides (BMI) et des cyanates esters.

6. Méthode selon la revendication 1, **caractérisée en ce que** la résine liquide est un composé de résine thermoplastique choisi parmi un groupe de produits comprenant des polyamides, par exemple des polyamides anioniques 6, PA11, des polyesters, par exemple des PBT cycliques, des polymères cristallins liquides, des polycétones et des polysulfones.

7. Méthode selon la revendication 1, **caractérisée en ce que** les fils thermoplastiques (6,8) ont un point de ramollissement adapté pour le préformage, en général dans de températures comprises entre 60°C et 350°C, de préférence entre 60°C et 250°C ou encore plus préférentiellement entre 180°C et 250°C.

8. Méthode selon la revendication 1, **caractérisée en ce que** la couture est pourvue d'au moins un motif de couture comme des rangées de couture multiples ou des jointures de couture parallèles.

9. Méthode selon la revendication 8, **caractérisée en ce que** la couture comprend des coutures polymères à haute température HTP utilisées pour lier la préforme (12) à des matériaux de noyaux avec une surface thermoplastique (TP), par exemple, tous les noyaux solubles enveloppés ou TP.

10. Méthode selon la revendication 1, **caractérisée en ce que** les fils (6,8) comprennent des fils recouverts de deux polymères différents ou un revêtement métallique au-dessus d'un polymère.

11. Méthode selon la revendication 1, **caractérisée en ce qu'**un nombre maximum de 16 couches est prévu pour la préforme (12).
